# EUROPÄISCHE PATENTSCHRIFT

(11) **EP 3 837 325 B1**
(45) Veröffentlichungstag und Bekanntmachung des Hinweises auf die Patenterteilung: **18.09.2024**
(21) Anmeldenummer: 18803631.3
(22) Anmeldetag: 13.11.2018
(51) Int. Cl.: C09D 133/10

(54) **BESCHICHTUNGSMITTEL FÜR SCHMUTZABWEISENDE SOWIE ABRIEBSBESTÄNDIGE BESCHICHTUNGEN**
COMPOSITIONS FOR DIRT-PROOF AND ABRASIVE COATINGS
COMPOSITIONS POUR REVETEMENTS ABRASIFS ET ANTI-SALES

(43) Veröffentlichungstag der Anmeldung: 23.06.2021
(73) Patentinhaber: Wacker Chemie AG, 81671 München (DE)
(72) Erfinder: HASHEMZADEH, Abdulmajid, 84489 Burghausen (DE); HOFFMANN, Armin, 84524 Neuötting (DE)
(74) Vertreter: Ege, Markus
(86) Internationale Anmeldenummer: PCT/EP2018/081050
(87) Internationale Veröffentlichungsnummer: WO 2020/098919

(56) Entgegenhaltungen:
- EP-A1- 2 832 754
- WO-A1-2015/162220
- US-B2- 9 567 484

## Beschreibung

Die Erfindung betrifft wässrige Beschichtungsmittel enthaltend (Meth)Acrylsäureester-Copolymerisate, vernetzbare Polyurethane und gegebenenfalls Additive sowie deren Verwendung zur Herstellung von Beschichtungen, insbesondere schmutzabweisenden, lösungsmittelbeständigen und zudem abriebsbeständigen Beschichtungen.

Beschichtungen dienen als Schutz von Gegenständen vor mechanischen, chemischen oder sonstigen Beschädigungen. Insbesondere poröse oder saugfähige Materialien wie Holz, Beton, Natur- oder Kunststein, sind besonders empfindlich und bedürfen einer möglichst umfassend schützenden Beschichtung. Denn solche Materialien haben eine besonders ausgeprägte Verschmutzungsneigung, vor allem bei Kontakt mit Flüssigkeiten, insbesondere mit farbigen Flüssigkeiten wie Kaffee, Tee oder Ölen. Die Verschmutzung bzw. die Bildung von farbigen Flecken auf dem Substrat kann dabei durch Extraktion von farbigen Stoffen aus dem Material oder durch Eintrag von farbigen Stoffen in das Substrat erfolgen. Auch bei Kontakt mit Chemikalien, wie Lösungsmittel, sollten die beschichteten Gegenstände keine Veränderung erleiden. Darüber hinaus sollten Beschichtungen auch im Falle mechanischer Beanspruchung stabil, insbesondere abriebsbeständig sein. Es bestehen also vielfache, sehr unterschiedliche Anforderungen an Beschichtungen. Eine besondere Herausforderung stellt es nun dar, all diese Anforderungen mit einer einzigen Beschichtung basierend auf einem einzigen Beschichtungsmittel zu erfüllen.

Eine Reihe bekannter Beschichtungsmittel werden zwar einzelnen, aber nicht allen der oben genannten Anforderungen gerecht beziehungsweise stellen einen unbefriedigenden Kompromiss dar, da zwar mehrere Anforderungen bedient, aber nicht alle Anforderungen adäquat gut erfüllt werden.

Beispielsweise schlägt die EP-A 1 926 787 für schmutzabweisende Beschichtungen Beschichtungsmittel auf Basis von Polymerlatexbindemitteln und anionischen Phosphorsäureester-Emulgatoren vor. Die WO-A 98/10026 lehrt hierfür anionisch stabilisierte Polymere von Styrol, Acrylsäureestern sowie ethylenisch ungesättigten Carbonsäuren. Die WO-A 2011/128232 empfiehlt zur Verbesserung der Verschmutzungsresistenz von zementären Beschichtungen, Trockenbaustoffe enthaltend redispergierbare Polymerpulver auf noch nicht vollständig abgebundene zementäre Untergründe aufzustreuen.

Alternativ ist auch vorgeschlagen worden, die Abwaschbarkeit von Verschmutzungen durch Modifizierung der Beschichtungen mit Additiven zu verbessern. Hierfür lehrt die DE-A 197 07 219 wässrige Beschichtungsmittel, die neben beliebigen filmbildenden organischen Polymeren niedermolekulare Organosiliciumverbindungen als wesentliche Komponente enthalten. Schmutzabweisende, abwaschbare Farben sind aus einer Reihe von Schriften bekannt, beispielsweise aus der EP-A1 0 614 955, welche hierfür Styrol-Acrylat-Copolymere als Additive für Farben lehrt. Die EP-A 1 732 997 empfiehlt zur Verbesserung des Pigmentbindevermögens und der Nassabriebsfestigkeit von pigmentären Beschichtungen den Zusatz von Polymeren, die auf bestimmten Mengen an sogenannten harten und weichen Monomeren sowie Ethylhexylacrylat und säuregruppenhaltigen Monomeren basieren.

Zur Steigerung der Abriebs- oder Chemikalienbeständigkeit wurden auch Beschichtungen mit vernetzbaren Polymeren, wie UV-härtbaren Polyurethanen, empfohlen, wie sie beispielsweise in der WO-A 2006/089935 beschrieben sind. US2017226377A1 offenbart eine wässrige Polyurethan-Polyacrylat-Hybriddispersion, erhältlich durch radikalische Polymerisation eines Acrylatpolymers in Gegenwart mindestens eines Polyurethans und mindestens eines Initiatorsystems. In einem Beispiel wird eine Mischung von 2-EHA/nBA/MMA/St/AA Monomeren in Gegenwart eines Polyurethans polymerisiert.

Ein Problem besteht jedoch weiterhin darin, Substrate mittels einer einzigen Beschichtung zugleich mit schmutzabweisenden, lösungsmittelbeständigen und abriebsbeständigen Eigenschaften auszustatten. Dies gilt umso mehr, wenn die Substrate auch vor der Verschmutzung durch unterschiedlichster Flüssigkeiten geschützt werden sollen, beispielsweise bei Kontakt mit hydrophoben beziehungsweise hydrophilen Flüssigkeiten wie Kaffee, Tee, Ketchup, Fetten oder Ölen, also insbesondere Stoffen aus dem Lebensmittelbereich oder gar Lösungsmitteln wie Aceton. Diese Problemstellung ist besonders ausgeprägt im Falle von porösen oder saugfähigen Substraten sowie bei Kontakt der Substrate mit warmen oder gar heißen Flüssigkeiten. All diese Anforderungen sollen mit einem einzigen, wohlaustarierten Beschichtungsmittel erfüllt werden.

Vor diesem Hintergrund bestand weiterhin die Aufgabe, Beschichtungsmittel bereitzustellen, mit denen die vorgenannten Probleme gelöst oder zumindest besser gelöst werden.

Gegenstand der Erfindung sind wässrige Beschichtungsmittel enthaltend
ein oder mehrere Copolymerisate von Acrylsäureestern oder Methacrylsäureestern,
ein oder mehrere vernetzbare, ethylenisch ungesättigte Gruppen tragende Polyurethane und
gegebenenfalls ein oder mehrere Additive,
wobei die Copolymerisate von Acrylsäureestern oder Methacrylsäureestern basieren auf den ethylenisch ungesättigten Monomeren bestehend aus
   a) den Monomeren 2-Ethylhexylacrylat und n-Butylacrylat, wobei die Monomere a) zu 20 bis 80 Gew.-%, bezogen auf das Gesamtgewicht der Copolymerisate der Acrylsäureester oder Methacrylsäureester, in die Copolymerisate von Acrylsäureestern oder Methacrylsäureestern einpolymerisiert sind,
   b) 20 bis 80 Gew.-%, bezogen auf das Gesamtgewicht der Copolymerisate der Acrylsäureester oder Methacrylsäureester, an einem oder mehreren ethylenisch ungesättigten Monomeren, deren Homopolymerisat eine Glasübergangstemperatur Tg von ≥ 30°C aufweist, ausgewählt aus der Gruppe bestehend aus Styrol, alpha-Methylstyrol, Methylmethacrylat, tert.-Butylmethacrylat, tert.-Butylacrylat, Laurylacrylat und Stearylacrylat,
   c) gegebenenfalls 0,1 bis 10 Gew.-%, bezogen auf das Gesamtgewicht der Copolymerisate der Acrylsäureester oder Methacrylsäureester, an einem oder mehreren Säure-Gruppen tragenden ethylenisch ungesättigten Monomeren ausgewählt aus der Gruppe bestehend aus Acrylsäure, Methacrylsäure, Crotonsäure, Fumarsäure, Maleinsäure, Itaconsäure, Acrylamidoglykolsäure, Vinylsulfonsäure, Methallylsulfonsäure, Vinylbenzolsulfonsäure, Acrylamidoethansulfonsäure, Acryl-amido-2-methylpropansulfonsäure, 2-Sulfoethylacrylat, 2-Sulfoethylmethacrylat, 3-Sulfopropylacrylat und 3-Sulfopropyl-methacrylat und
   d) gegebenenfalls 0 bis 5 Gew.-%, bezogen auf das Gesamtgewicht der Copolymerisate der Acrylsäureester oder Methacrylsäureester, an einem oder mehreren ethylenisch ungesättigten, Silan-Gruppen tragenden Monomeren d).

Auf Monomeren a) basieren die Copolymerisate von (Meth)acrylsäureestern zu 20 bis 80 Gew.-%, bevorzugt 30 bis 70 Gew.-% und am meisten bevorzugt 40 bis 60 Gew.-%, je bezogen auf das Gesamtgewicht der Copolymerisate von (Meth)acrylsäureestern.

Die Copolymerisate von (Meth)acrylsäureestern basieren zu 20 bis 80 Gew.-%, bevorzugt 30 bis 70 Gew.-% und am meisten bevorzugt 40 bis 60 Gew.-% auf Monomeren b), je bezogen auf das Gesamtgewicht der Copolymerisate von (Meth)acrylsäureestern.

Die Monomerauswahl bzw. die Auswahl der Gewichtsanteile der Monomere erfolgt dabei so, dass die vorgenannten Glasübergangstemperaturen Tg resultieren. Die Glasübergangstemperatur Tg der Polymerisate kann in bekannter Weise mittels DSC (Dynamische Differenz-Thermoanalyse, DIN EN ISO 11357-1/2), beispielsweise mit dem dynamischen Differenzkalorimeter DSC1 der Firma Mettler-Toledo im offenen Tiegel bei einer Heizrate von 10 K/min bestimmt werden. Als Glasübergangstemperatur ausgewertet wird die Temperatur am Mittelpunkt der Stufe des Wärmefluss-Diagramms der zweiten Aufheizkurve (Mittelpunkt = halbe Stufenhöhe). Die Tg kann auch mittels der Fox-Gleichung näherungsweise vorausberechnet werden. Nach Fox T. G., Bull. Am. Physics Soc. 1, 3, S. 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edi¬ition, J. Wiley & Sons, New York (1975) aufgeführt. Der Anteil der einzelnen Monomere, insbesondere die Anteile von 2-Ethylhexylacrylat und n-Butylacrylat, an den Polymerisaten kann mit analytischen Routinemethoden bestimmt werden, wie beispielsweise mittels NMR-Spektroskopie.

Die Monomere c) können auch in Form von Salzen, insbesondere (Erd)Alkali- oder Ammonium-Salzen, eingesetzt werden. Besonders bevorzugt sind Acrylsäure, Methacrylsäure, Itaconsäure, Maleinsäure und Acrylamido-2-methylpro-pansulfonsäure. Am meisten bevorzugt sind Acrylsäure und insbesondere Methacrylsäure.

Die Copolymerisate von (Meth)acrylsäureestern basieren vorzugsweise zu 0,1 bis 10 Gew.-%, besonders bevorzugt 0,5 bis 6 Gew.-%, mehr bevorzugt 1 bis 5 Gew.-% und am meisten bevorzugt 2,5 bis 4,5 Gew.-% auf Monomeren c), je bezogen auf das Gesamtgewicht der Copolymerisate von (Meth)acrylsäureestern.

Die Copolymerisate von (Meth)acrylsäureestern können zusätzlich auf einem oder mehreren ethylenisch ungesättigten, Silan-Gruppen tragenden Monomeren d) basieren.

Beispiele für Monomere d) sind Verbindungen der allgemeinen Formel R¹SiR²₀₋₂(OR³)₁₃, wobei R² ein C₁- bis C₃-Alkylrest, C₁-bis C₃-Alkoxyrest oder Halogen, beispielsweise Chlor oder Brom, ist, R¹ die Bedeutung CH₂=CR⁴-(CH₂)₀₋₁ oder CH₂=CR⁴CO₂(CH₂)₁₋₃ mit R⁴ als Kohlenstoffrest mit 1 bis 10 C-Atomen hat, R³ ein unverzweigter oder verzweigter, gegebenenfalls substituierter Alkylrest mit 1 bis 12 C-Atomen, vorzugsweise 1 bis 3 C-Atomen, ist. Das Silicium-Atom Si ist hierbei bekanntermaßen vierwertig.

Bevorzugt sind γ-Acryl- bzw. γ-Methacryloxypropyltri(alkoxy)-silane, α-Methacryloxymethyltri(alkoxy)silane, γ-Methacryl-oxypropylmethyldi(alkoxy)silane, Vinylalkyldi(alkoxy)silane und Vinyltri(alkoxy)silane, wobei als Alkoxygruppen beispielsweise Methoxy-, Ethoxy-, Isopropoxy-, Methoxyethylen-, Ethoxyethylen-, Methoxypropylenglykolether- bzw. Ethoxypropylenglykolether-Reste eingesetzt werden können. Besonders bevorzugte Monomere d) sind Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyl-tris-(1-methoxy)-isopropoxysilan, Vinyltributoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltris-(2-methoxyethoxy)silan, Allylvinyltrimethoxysilan, Allyltrimethoxysilan, Vinyldimethylmethoxysilan, Vinyldimethylethoxysilan, Vinylisobutyldimethoxysilan, Vinyltriisopropyloxysilan, Vinylltributoxysilan, Vinyltrihexyloxysilan, Vinylmethoxydihexyloxysilan, Vinyltrioctyloxysilan, Vinyldimethoxyoctyloxysilan, Vinylmethoxydioctyloxysilan, Vinylmethoxydilauryloxysilan und Vinyldimethoxylauryloxysilan.

Als ungesättigte Alkoxysilane werden am meisten bevorzugt Vinyltrimethoxysilan, Vinylmethyldimethoxysilan, Vinyltriethoxysilan, Vinyltriisopropoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan.

Vinylsilane, das heißt Vinyl-Gruppen enthaltende Silane, sind bevorzugt.

Die Copolymerisate von (Meth)acrylsäureestern basieren vorzugsweise auf 0 bis 5 Gew.-%, besonders bevorzugt 0,1 bis 3 Gew.-% und am meisten bevorzugt 0,5 bis 1,5 Gew.-% an Monomeren d), je bezogen auf das Gesamtgewicht der Copolymerisate von (Meth)acrylsäureestern.

Die Copolymerisate von (Meth)acrylsäureestern basieren vorzugsweise zu 20 bis 60 Gew.-%, besonders bevorzugt 30 bis 50 Gew.-% und am meisten bevorzugt 35 bis 45 Gew.-% auf 2-Ethylhexylacrylat a), je bezogen auf das Gesamtgewicht der Copolymerisate von (Meth)acrylsäureestern.

Auf 2-Ethylhexylacrylat a) basieren die Copolymerisate von (Meth)acrylsäureestern vorzugsweise zu 60 bis 99 Gew.-%, mehr bevorzugt 70 bis 96 Gew.-%, besonders bevorzugt 80 bis 93 Gew.-% und am meisten bevorzugt 85 bis 90 Gew.-%, je bezogen auf das Gesamtgewicht der Monomere Ethylhexylacrylat a) und n-Butylacrylat a).

Die Copolymerisate von (Meth)acrylsäureestern basieren vorzugsweise zu 1 bis 20 Gew.-%, besonders bevorzugt 3 bis 15 Gew.-% und am meisten bevorzugt 4 bis 10 Gew.-% auf n-Butylacrylat a), je bezogen auf das Gesamtgewicht der Copolymerisate von (Meth)acrylsäureestern.

Auf n-Butylacrylat a) basieren die Copolymerisate von (Meth)-acrylsäureestern vorzugsweise zu 1 bis 40 Gew.-%, mehr bevorzugt 4 bis 30 Gew.-%, besonders bevorzugt 7 bis 20 Gew.-% und am meisten bevorzugt 10 bis 15 Gew.-%, je bezogen auf das Gesamtgewicht der Monomere Ethylhexylacrylat a) und n-Butylacrylat a).

Das Gewichtsverhältnis von 2-Ethylhexylacrylat a) zu n-Butylacrylat a) beträgt vorzugsweise von 3 zu 1 bis 15 zu 1, besonders bevorzugt von 5 zu 1 bis 10 zu 1 und am meisten bevorzugt von 6 zu 1 bis 7 zu 1.

Die Copolymerisate von (Meth)acrylsäureestern haben Glasübergangstemperaturen Tg von vorzugsweise 5 bis 50°C, besonders bevorzugt 10 bis 40°C und am meisten bevorzugt von 15 bis 30°C.

Die Copolymerisate von (Meth)acrylsäureestern liegen vorzugsweise in Form von wässrigen Dispersionen vor.

Die Copolymerisate von (Meth)acrylsäureestern sind erhältlich mittels radikalisch initiierter Polymerisation, insbesondere Emulsionspolymerisation in wässrigem Medium, von einem oder mehreren der oben genannten Monomere a), einem oder mehreren der oben genannten Monomere b) und gegebenenfalls einem oder mehreren weiteren der oben genannten, von den Monomeren a) und b) verschiedenen ethylenisch ungesättigten Monomeren.

Bei der Polymerisation fallen die Copolymerisate von (Meth)-acrylsäureestern vorzugsweise in Form von wässrigen Dispersionen an.

Die Polymerisationstemperatur ist vorzugsweise zwischen 40°C und 100°C, besonders bevorzugt zwischen 60°C und 90°C. Bei der Copolymerisation wird im Allgemeinen bei Drücken zwischen 0,5 bar und 7 bar gearbeitet.

Die Polymerisation erfolgt vorzugsweise bei pH-Werten von 2 bis 7, besonders bevorzugt von 3 bis 5, und kann beispielsweise mit den üblichen organischen oder anorganischen Säuren, Basen oder Puffern wie Phosphorsäure, Kohlensäure, Carbonsäuren oder Ammoniak oder deren Salze, eingestellt werden. Nach der Polymerisation wird vorzugsweise neutralisiert. Die Polymerdispersionen weisen pH-Werte auf von vorzugsweise 6 bis 10, besonders bevorzugt 6 bis 8 und am meisten besonders von 7. Dies ist vorteilhaft zur Lösung der erfindungsgemäßen Aufgabe.

Die Initiierung der Polymerisation kann beispielsweise mit den für die Emulsionspolymerisation gebräuchlichen wasserlöslichen bzw. monomerlöslichen Initiatoren oder Redox-Initiator-Kombinationen erfolgen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxo-pivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0, 1 bis 5 Gew.-%, vorzugsweise 0,1 bis 1 Gew.-% und am meisten bevorzugt 0,1 bis 0,5 Gew.-%, jeweils bezogen auf das Gesamtgewicht der Monomere, eingesetzt.

Als Redox-Initiatoren werden vorzugsweise Kombinationen aus den genannten Initiatoren und Reduktionsmitteln verwendet. Geeignete Reduktionsmittel sind beispielsweise die Sulfite und Bisulfite der Alkalimetalle und von Ammonium, beispielsweise Natriumsulfit, die Derivate der Sulfoxylsäure wie Zink-oder Alkaliformaldehydsulfoxylate, beispielsweise Natriumhydroxymethansulfinat, und Ascorbinsäure. Die Reduktionsmittelmenge beträgt im Allgemeinen 0,015 bis 3 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,1 bis 1,0 Gew.-%, vorzugsweise 0,2 bis 0,6 Gew.-% und am meisten bevorzugt 0,3 bis 0,5 Gew.-%, bezogen auf die zu polymerisierenden Monomeren, eingesetzt. Die regelnden Substanzen können separat oder auch vorgemischt mit Reaktionskomponenten dosiert werden. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Im Allgemeinen wird in Gegenwart von Emulgatoren polymerisiert. Die wässrigen Dispersionen der Copolymerisate von (Meth)acrylsäureestern enthalten vorzugsweise 0,1 bis 5 Gew.-%, vorzugsweise 0,2 bis 4 Gew.-% und am meisten bevorzugt 0,5 bis 3 Gew.-% Emulgatoren, bezogen auf das Trockengewicht der Copolymerisate von (Meth)acrylsäureestern. Geeignete Emulgatoren sind allgemein kationische Emulgatoren, nichtionische Emulgatoren und insbesondere anionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 EthylenoxidEinheiten. Besonders bevorzugt sind Alkylsulfate, insbesondere Laurylsulfate. Ein solcher Einsatz von Emulgatoren ist vorteilhaft zur Lösung der erfindungsgemäßen Aufgabe.

Bevorzugt sind auch Kombinationen von mehreren Emulgatoren. Besonders bevorzugt sind Kombinationen von einem oder mehreren anionischen Emulgatoren und ein oder mehreren nichtionischen Emulgatoren.

Nichtionische Emulgatoren sind in den wässrigen Dispersionen der Copolymerisate von (Meth)acrylsäureestern vorzugsweise zu ≤ 3 Gew.-% und besonders bevorzugt ≤ 1 Gew.-% enthalten, bezogen auf das Trockengewicht der Copolymerisate von (Meth)-acrylsäureestern. Am meisten bevorzugt sind keine nichtionischen Emulgatoren enthalten. Der Anteil der anionischen Emulgatoren beträgt vorzugsweise 50 bis 100 Gew.-% und besonders bevorzugt 70 bis 100 Gew.-%, je bezogen auf das Gesamtgewicht der insgesamt für die Polymerisation enthaltenen Emulgatoren. Am meisten bevorzugt sind als Emulgatoren ausschließlich anionische Emulgatoren enthalten.

Es kann auch in Gegenwart von 0 bis 10 Gew.-%, insbesondere 0,1 bis 7 Gew.-% an Schutzkolloiden, bezogen auf das Gesamtgewicht der insgesamt eingesetzten Monomere, polymerisiert werden, wie beispielsweise Polyvinylalkohole. Vorzugsweise wird in Abwesenheit von Schutzkolloiden polymerisiert.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf, entfernt werden.

Die so erhältlichen wässrigen Dispersionen der Copolymerisate von (Meth)acrylsäureestern haben einen Feststoffgehalt von vorzugsweise 20 bis 70 Gew.-% und besonders bevorzugt von 30 bis 60 Gew.-%.

Die Copolymerisate von (Meth)acrylsäureestern sind vorzugsweise nicht Schutzkolloid-stabilisiert. Wässrige Dispersionen der Copolymerisate von (Meth)acrylsäureestern enthalten vorzugsweise keine Schutzkolloide.

Die Polymerisate in Form von wässrigen Dispersionen haben mittlere Partikeldurchmesser von vorzugsweise 40 und 200 nm und besonders bevorzugt 60 und 120 nm (Bestimmung mittels des Messgeräts Beckmann Coulter LS nach ISO 13320 (PIDS)).

Die wässrigen Beschichtungsmittel enthalten vorzugsweise 20 bis 90 Gew.-%, besonders bevorzugt 30 bis 70 Gew.-%, noch mehr bevorzugt 40 bis 60 Gew.-% und am meisten bevorzugt 45 bis 55 Gew.-% an Copolymerisaten von (Meth)acrylsäureestern, bezogen auf das Trockengewicht der Beschichtungsmittel.

Polyurethane sind wie allgemein bekannt Polymere, die durch Polyadditionsreaktion von Diolen oder Polyolen mit Polyisocyanaten gebildet werden.

Vernetzbare Polyurethane tragen ethylenisch ungesättigte Gruppen, wie beispielsweise Einheiten von ethylenisch ungesättigten Carbonsäuren oder deren Derivaten, insbesondere (Meth)Acrylsäurederivate.

Die vernetzbaren Polyurethane sind vorzugsweise in Wasser dispergierbar, insbesondere selbstdispergierbar. Selbstdispergierbar bedeutet hierbei allgemein, dass die Polyurethane in Wasser dispergierbar sind auch in Abwesenheit von Dispergierhilfsmitteln, wie Emulgatoren oder Schutzkolloiden. Vernetzbare Polyurethane tragen vorzugsweise Carbonsäure- oder Sulfonsäure-Gruppen, die vorzugsweise vollständig oder teilweise in Form ihrer Salze vorliegen, insbesondere ihrer (Erd)Alkali-, Ammoniak- oder Ammonium-Salze.

Die wässrigen Dispersionen der vernetzbaren Polyurethane sind vorzugsweise aufgebaut aus
A) einem oder mehreren aliphatischen oder aromatischen Polyisocyanaten mit mindestens zwei NCO-Funktionalitäten,
B) mindestens einer Verbindung mit mindestens einer gegenüber Isocyanat reaktiven Gruppe sowie mindestens einer C=C-Doppelbindung,
   insbesondere mindestens einer mit UV-Strahlung polymerisierbaren C=C-Doppelbindung,
C) gegebenenfalls mindestens eine Verbindung mit mindestens zwei gegenüber Isocyanatgruppen reaktiven Gruppen, die ausgewählt sind aus Hydroxyl-, Mercapto-, primären und/oder sekundären Amino-Gruppen,
D) vorzugsweise mindestens einer Verbindung mit mindestens einer gegenüber Isocyanat reaktiven Gruppe sowie mindestens einer Carboxylgruppe oder Sulfonsäuregruppe,
E) vorzugsweise mindestens einer basischen Verbindung für eine Neutralisation oder Teilneutralisation der Säuregruppen der Verbindungen d),
F) gegebenenfalls wenigstens einer von B), D) und E) verschiedenen Verbindung, die nur eine gegenüber Isocyanatgruppen reaktive Gruppe aufweist,
G) gegebenenfalls ein oder mehrere thermische Initiatoren,
H) gegebenenfalls ein oder mehrere Photoinitiatoren,
I) gegebenenfalls Zusatzstoffen, wie Reaktivverdünner oder sonstige Lackzusatzstoffe, sowie
J) Wasser.

Bei den Komponenten A) der vernetzbaren Polyurethane handelt es sich vorzugsweise um aromatische oder insbesondere aliphatische Polyisocyanate mit vorzugsweise 2 bis 5, insbesondere 2,0 bis 4,0 NCO-Funktionalitäten. Beispiele hierfür sind Hexamethylendiisocyanat, 1,3- und 1,4-Bis(isocyanatomethyl)cyclohexan, Isophorondiisocyanat und Di(isocyanatocyclohexyl)-methan. Bevorzugt sind Isocyanuratgruppen, Biuretgruppen, Uretdiongruppen oder Urethan- und/oder Allophanatgruppen aufweisende Polyisocyanate. Besonders bevorzugt umfasst die Komponente A) wenigstens eine Verbindung mit zwei freien Isocyanatgruppen, mindestens einer Allophanatgruppe und mindestens einer radikalisch polymerisierbaren C=C- Doppelbindung, wobei direkt an die Doppelbindung eine Carbonylgruppe oder ein Sauerstoffatom in Etherfunktion gebunden ist.

Bevorzugte Komponenten B) sind Monoester zwei- oder mehrwertiger Alkohole mit α,β-ethylenisch ungesättigten Mono- und/oder Dicarbonsäuren oder deren Anhydriden, wie Fumarsäure, Maleinsäure(anhydrid), Crotonsäure, Itaconsäure, insbesondere (Meth)Acrylsäure. Bei den Alkoholen kann es sich beispielsweise um Diole, Triole oder Polyole handeln. Beispiele für sind Diole, insbesondere Glykole oder α,ω-Diole, vorzugsweise mit 2 bis 25 Kohlenstoffatomen, besonders bevorzugt 2 bis 10 Kohlenstoffatomen. Triole und Polyole weisen vorzugsweise 3 bis 25, besonders bevorzugt 3 bis 18 Kohlenstoffatome auf, wie beispielsweise Glycerin, Trimethylolpropan, Erythrit, Pentaerythrit, Sorbit. Bevorzugt sind als Komponente B) auch Hydroxy-Gruppen tragende Alkyl(Meth)Acrylate. Gegebenenfalls können diese Verbindungen auch noch durch Umsetzung mit geeigneten Kettenverlängerern, wie mehrfunktionellen Isocyanaten oder mehrfunktionellen Carbonsäuren, kettenverlängert sein. Geeignete Komponenten B) sind auch die Ester oder Amide von Aminoalkoholen mit den zuvor genannten α,β-ethylenisch ungesättigten Mono- und/oder Dicarbonsäuren, Hydroxyalkylvinylethern, wie Hydroxybutylvinylethern. Als Komponente B) besonders bevorzugt sind (Meth)Acrylsäuremonoester von aliphatischen Diolen sowie (Meth)Acrylamide von Aminoalkoholen, ferner Hydroxyalkylvinylether, wie Hydroxybutylvinylether, von denen Hydroxyalkylacrylate mit 2 bis 4 C-Atomen im Alkylrest, wie 2-Hydroxyethylacrylat, bevorzugt sind.

Beispiele für Komponenten C) sind niedermolekulare Alkohole mit 2 bis 20 Kohlenstoffatomen und 2 bis 6 Hydroxylgruppen, insbesondere Glykole wie 1,1-, 1,2-, 1,3- oder 1,4-Di(hydroxymethyl)cyclohexan, Bis(hydroxycyclohexyl)propan, Tetramethylcyclobutandiol, Cyclooctandiol oder Norbornandiol. Besonders bevorzugt werden aliphatische Alkandiole mit 2 bis 12 Kohlenstoffatomen. Weitere Beispiele für Komponenten C) sind polymere Polyole; Copolymerisate basierend auf Monoestern der vorgenannten zwei- oder mehrwertigen Alkohole mit wenigstens einer α,β-ethylenisch ungesättigten Mono- und/oder Dicarbonsäure und mindestens einem weiteren Comonomer, wie Vinylaromaten, (Meth)Acrylsäureestern, Vinylestern, Vinylhalogeniden, Olefinen, Nitrilen; Polyesterole auf Basis von aliphatischen oder aromatischen Di-, Tri- und/oder Polycarbonsäuren mit Di-, Tri- und/oder Polyolen sowie Polyesterole auf Lacton-Basis; Polycarbonat-Diole; Polyetherole; oder Jeffamine (Handelsname der Firma Huntsman). Bei Jeffaminen handelt es sich um Mono-, Di- oder Triamine, die auf einer Polyetherbasis, wie Polyethylenoxide, Polypropylenoxide oder gemischte Polyethylenoxide/Polypropylenoxide, beruhen und eine Molmasse von bis zu 5000 g/mol aufweisen können.

Bevorzugte Komponenten D) sind aliphatische Monomercapto-, Monohydroxy- und Monoamino- und Iminocarbonsäuren und entsprechende Sulfonsäuren. Bevorzugt sind Carbonsäuren mit 2 bis 14 Kohlenstoffatomen, wie Hydroxyethansulfonsäure, Hydroxypropansulfonsäure, Mercaptoethansulfonsäure, Mercaptopropansulfonsäure, Aminopropansulfonsäure, Glycin (Aminoessigsäure) oder Iminodiessigsäure.

Als Komponenten E) können gängige Säuren, Basen oder Puffer Einsatz finden, wie beispielsweise (Erd)Alkali-Hydroxide, -Oxide, -Carbonate, -Hydrogencarbonate, Ammoniak, oder primäre, sekundäre oder tertiäre Amine, insbesondere Alkanolamine.

Bei Komponente F) kann es sich um Hydroxyl-, Mercapto-, oder primäre oder sekundäre Amino-Gruppen handeln. Geeignet sind die üblichen, dem Fachmann bekannten Verbindungen, die als sogenannte Abstopper zur Herabsetzung der Zahl reaktiver freier Isocyanatgruppen eingesetzt werden, wie monofunktionelle Alkohole, insbesondere Methanol, Ethanol, Propanol, n-Butanol, Amine mit einer primären oder sekundären Aminogruppe, insbesondere Methylamin, Ethylamin, n-Propylamin, Diisopropylamin, Dimethylamin, Diethylamin, Di-n-propylamin, Diisopropylamin.

Als thermische Initiatoren G) können beispielsweise Peroxide, Hydroperoxide, Wasserstoffperoxid, Persulfate, Azoverbindungen, hochsubstituierte z.B. hexasubstituierte Ethane, Amin-N-oxide, Redoxkatalysatoren Einsatz finden. Bevorzugt sind wasserlösliche Initiatoren. Konkrete Ausführungsformen sind beispielsweise in der WO-A 01/23453 beschrieben.

Als Photoinitiatoren H) können hierfür gängige Ketone Einsatz finden, wie Benzophenon und Benzophenonderivate. Weitere Ausführungsformen sind beispielsweise in der WO-A 01/23453 beschrieben.

Geeignete weitere Zusatzstoffe I, wie Reaktivverdünner oder Lackzusatzstoffe, sind beispielhaft in der WO-A 2006/089935 aufgelistet.

Bevorzugt sind vernetzbare Polyurethane, bei denen die Isocyanatgruppen der Komponente A) zu folgenden Mol%-Anteilen mit folgenden Komponenten umgesetzt sind:
- zu bevorzugt 5 bis 80 Mol%, besonders bevorzugt 10 bis 80 Mol% und am meisten bevorzugt 15 bis 75 Mol% mit der Komponente B),
- zu bevorzugt 0 bis 70 Mol%, besonders bevorzugt 0,2 bis 60 Mol% und am meisten bevorzugt 0,5 - 30 Mol% mit der Komponente C) und
- zu bevorzugt 0,1 bis 40 Mol%, besonders bevorzugt 2 bis 35 Mol% und am meisten bevorzugt 5 bis 30 Mol% mit der Komponente D),
wobei sich die Angaben auf molare Äquivalente einer funktionellen Gruppe beziehen.

Die vernetzbaren Polyurethane haben Glasübergangstemperaturen Tg von vorzugsweise ≤ 30°C, besonders bevorzugt ≤ 20°C und am meisten bevorzugt ≤ 15°C. Die Glasübergangstemperaturen Tg sind vorzugsweise ≥ -30°C, besonders bevorzugt ≥ -10°C und am meisten bevorzugt ≥ 0°C.

Die vernetzbaren Polyurethane liegen vorzugsweise in Form von wässrigen Dispersionen vor. Die wässrigen Dispersionen der vernetzbaren Polyurethane, die zur Herstellung der erfindungsgemäßen Beschichtungsmittel eingesetzt werden, haben einen Feststoffgehalt von vorzugsweise 5 bis 70%, insbesondere 20 bis 50%.

Weitere Ausgestaltungen der vernetzbaren Polyurethane und deren Herstellung sind beispielsweise beschrieben in der WO-A 01/23453 oder der WO-A 2006/089935.

Die erfindungsgemäßen wässrigen Beschichtungsmittel enthaltend vorzugsweise 10 bis 80 Gew.-%, besonders bevorzugt 30 bis 70 Gew.-%, noch mehr bevorzugt 40 bis 60 Gew.-% und am meisten bevorzugt 45 bis 55 Gew.-% vernetzbare Polyurethane (trocken), bezogen auf das Trockengewicht der Beschichtungsmittel.

Beispiele für Additive der erfindungsgemäßen wässrigen Beschichtungsmittel sind Hydrophobierungsmittel, wie Wachse oder Silikone, Verdickungsmittel, Mattierungsmittel, Entschäumer, Rheologiemodifikatoren, Frostschutzmittel, Filmbildehilfsmittel, Netzmittel, zusätzliche Tenside, Biozide, Weichmacher oder von den erfindungsgemäßen Copolymerisaten von (Meth)acrylsäureestern verschiedene polymere Bindemittel oder von den erfindungsgemäßen vernetzbaren Polyurethanen verschiedene Polyurethane. Die Beschichtungsmittel enthalten vorzugsweise 0 bis 20 Gew.-% und besonders bevorzugt 0,1 bis 10 Gew.-% Additive, bezogen auf das Trockengewicht der Beschichtungsmittel. In einer bevorzugten Ausführungsform enthalten die Beschichtungsmittel ≤ 2 Gew.-%, mehr bevorzugt ≤ 1 Gew.-% Weichmacher, je bezogen auf das Trockengewicht der Beschichtungsmittel. Am meisten bevorzugt enthalten die Beschichtungsmittel keine Weichmacher.

Des Weiteren können die wässrigen Beschichtungsmittel Pigmente, Farbstoffe oder Füllstoffe enthalten. Bevorzugt handelt es sich bei den Beschichtungsmitteln um Klarlacke. Klarlacke enthalten vorzugsweise keine Pigmente oder Farbstoffe und besonders bevorzugt keine Füllstoffe.

Die wässrigen Beschichtungsmittel enthalten vorzugsweise keine Schutzkolloide.

Die wässrigen Beschichtungsmittel enthalten vorzugsweise ein oder mehrere Emulgatoren. Emulgatoren sind vorzugsweise zu 0,1 bis 5 Gew.-%, besonders bevorzugt 0,2 bis 4 Gew.-% und am meisten bevorzugt 0,5 bis 2 Gew.-% enthalten, bezogen auf das Trockengewicht der wässrigen Beschichtungsmittel. Hierbei sind die oben genannten Emulgatoren bevorzugt, die weiter oben aufgeführt sind.

Die wässrigen Beschichtungsmittel enthalten vorzugsweise 30 bis 90 Gew.-% und besonders bevorzugt von 40 bis 85 Gew.-% Wasser, bezogen auf das Gesamtgewicht der wässrigen Beschichtungsmittel.

Die Herstellung der wässrigen Beschichtungsmittel ist an keine besondere Vorgehensweise gebunden und kann auf herkömmliche Weise erfolgen, beispielsweise durch Mischen der Bestandteile der Beschichtungsmittel, vorzugsweise bei Raumtemperatur. Es können die üblichen Mischer oder Rührer Einsatz finden.

Die Copolymerisate von (Meth)acrylsäureestern und/oder die vernetzbaren Polyurethane werden vorzugsweise in Form von wässrigen Dispersionen eingesetzt.

Ein weiterer Gegenstand der Erfindung ist die Verwendung der wässrigen Beschichtungsmittel zur Herstellung von Beschichtungen, insbesondere von schmutzabweisenden, lösungsmittelbeständigen und/oder abriebsbeständigen Beschichtungen.

Die Applikation der Beschichtungsmittel auf Substrate ist an kein besonderes Verfahren gebunden und kann beispielsweise durch Streichen, beispielsweise mittels Pinsel, Walzen, Rollen oder Mops, Verspachteln, Druckverfahren, Sprühen oder Spritzen erfolgen.

Es können ein oder mehrere Schichten des wässrigen Beschichtungsmittels aufgetragen werden. Vorzugsweise wird erst ausgehärtet bevor weiteres wässriges Beschichtungsmittel aufgetragen wird.

Beispiele für Substrate sind Holz oder Holzwerkstoffe, beispielsweise Holzwandvertäfelungen, Möbel, Textilien, Papier, mineralische Untergründe, wie Beton, Estriche, Putz oder Gips, Keramik, Natur- oder Kunststein. Die Substrate können hierbei auch porös oder saugfähig sein.

Die wässrigen Beschichtungsmittel können auf unbehandelte oder vorbehandelte Substrate appliziert werden. Vorbehandelte Substrate sind beispielsweise bereits mit einem oder mehreren, von den erfindungsgemäßen wässrigen Beschichtungsmitteln verschiedenen Beschichtungsmitteln beschichtet, wie beispielsweise mit einer Farbe, einer Grundierung oder einem Primer. Die erfindungsgemäßen wässrigen Beschichtungsmittel können aber auch unmittelbar, d.h. als erstes Beschichtungsmittel auf die Substrate aufgebracht werden. Bevorzugt wird auf Beschichtungen basierend auf erfindungsgemäßen wässrigen Beschichtungsmitteln kein weiteres Beschichtungsmittel aufgebracht. Die erfindungsgemäße Beschichtung ist also vorzugsweise das Topcoating.

Die Beschichtungen basierend auf erfindungsgemäßen wässrigen Beschichtungsmitteln haben Schichtdicken von vorzugsweise 0,01 bis 50 µm.

Aushärtung oder Vernetzung des Beschichtungsmittels kann beispielsweise mittels Strahlung oder thermisch erfolgen. Vorzugsweis werden die wässrigen Beschichtungsmittel nach ihrer Applikation erst auf herkömmliche Weise getrocknet und anschließend ausgehärtet oder vernetzt.

Die Strahlungshärtung kann durch Einwirkung energiereicher Strahlung, wie UV-Strahlung oder Tageslicht, erfolgen, vorzugsweise Licht der Wellenlänge 250 bis 600 nm oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen, LED oder Excimerstrahler.

Die erfindungsgemäßen Beschichtungsmittel führen zu Beschichtungen, die besonders vorteilhafte schmutzabweisende Eigenschaften und zugleich eine hohe Resistenz gegenüber mechanischen Beanspruchungen, insbesondere bei Abrieb, aufweisen. Darüber hinaus sind die Beschichtungen auch noch überraschend beständig gegenüber Chemikalien, insbesondere gegenüber Lösungsmittel. Die Verschmutzungsresistenz besteht sogar bei Kontamination der Beschichtungen mit einer großen Varietät an Flüssigkeiten, wie hydrophile oder hydrophobe Flüssigkeiten, beispielsweise Kaffee, Tee, Ketchup, Fette oder Öle aus dem Lebensmittelbereich oder auch Mineralöl oder wässrige Tinten. Auch bei Kontakt mit warmen oder heißen Flüssigkeiten kann eine Verschmutzungsresistenz erreicht werden. Verschmutzungen auf der Beschichtung können vollständig oder zumindest teilweise wieder abgewaschen werden. Zudem zeigen die erfindungsgemäßen Beschichtungen auch eine vorteilhafte UV-Beständigkeit.

All diese vielfachen, vorteilhaften Eigenschaften der erfindungsgemäß hergestellten Beschichtungen können erfindungsgemäß durch Applikation nur eines einzigen Beschichtungsmittels erreicht werden, das die erfindungsgemäße Kombination der erfindungsgemäßen Bestandteile enthält. Dagegen besteht bei herkömmlicher Kombination mehrerer Wirkstoffe für Beschichtungsmittel regelmäßig das Problem, dass die unterschiedlichen Wirkstoffe in der Mischung ihre Wirkung schlechter oder gar nicht mehr entfalten oder sogar das Eigenschaftsprofil der Beschichtungsmittel oder der Beschichtungen gegenüber nicht mit Wirkstoffen modifizierten Systemen sogar verschlechtert wird.

Überraschenderweise wirken bei der erfindungsgemäßen Vorgehensweise die Copolymerisate von (Meth)acrylsäureestern und die vernetzbaren Polyurethane in synergistischer Weise zusammen, so dass die erfindungsgemäßen Beschichtungen vorteilhafterweise zugleich schmutzabweisende und abriebsbeständige Eigenschaften und zudem Lösungsmittel-Resistenz aufweisen. Besonders überraschend war hierbei auch, dass durch Zusatz der Copolymerisate von (Meth)acrylsäureestern die mechanischen Eigenschaften, insbesondere die Abriebsbeständigkeit, der Beschichtungen verbessert werden konnte gerade auch im Vergleich zu Beschichtungen, die im Wesentlichen bloß auf vernetzbaren Polyurethanen basieren. Dies war insofern besonders überraschend, da üblicherweise zur Verbesserung der Abriebsbeständigkeit gerade vernetzbare Polyurethane, nicht aber Copolymerisate von (Meth)acrylsäureestern eingesetzt werden.

Die nachfolgenden Beispiele dienen zur weiteren Erläuterung der Erfindung, ohne diese in irgendeiner Weise einzuschränken.

### Beispiel 1 (Bsp.1):

Herstellung eines Copolymerisat von (Meth)acrylsäureestern in Form einer wässrigen Dispersion:
In einem Reaktor mit 3 Liter Volumen wurden 1,104 kg deionisiertes Wasser, 1,23 g Kaliumperoxodisulfat, 12,3 g Natriumlaurylsulfat und 0,7 g Ammoniak (12,5%-ig in Wasser) in Stickstoffatmosphäre vorgelegt und unter Rühren auf 40°C erwärmt. Bei Erreichen von 40°C wurde folgende Monomermischung 1 in den Reaktor gegeben:
Monomermischung 1:

| | |
|---|---|
| n-Butylacrylat | 9,8 g |
| Ethylhexylacrylat | 65,1 g |
| Methacrylsäure | 4,9 g |
| Methylmethacrylat | 42,3 g |
| Styrol | 40,7 g. |

Anschließend wurde die Temperatur auf 80°C erhöht. 30 Minuten nach dem Erreichen von 80°C wurde die folgende Monomermischung 2 während 150 Minuten und die folgende Kaliumperoxodisulfatlösung während 180 Minuten in den Reaktor zudosiert:
Monomermischung 2:

| | |
|---|---|
| n-Butylacrylat | 39,5 g |
| Ethylhexylacrylat | 263,1 g |
| Methacrylsäure | 19,7 g |
| Methylmethacrylat | 171,0 g |
| Styrol | 164,5 g. |

Kaliumperoxodisulfatlösung:

| | |
|---|---|
| Kaliumperoxodisulfat | 1,64 g |
| Wasser | 53,30 g. |

Nach Dosierende wurde für zwei Stunden bei 85°C gerührt. Der pH-Wert wurde während der Polymerisation im Bereich von 3 bis 4,5 gehalten. Anschließend wurde auf Raumtemperatur abgekühlt und der pH-Wert mit wässriger Ammoniaklösung auf 7 eingestellt.

Die so erhaltene Polymerdispersion hatte einen Feststoffgehalt von 41,5%, eine Brookfield-Viskosität von 219 mPa.s sowie eine gewichtsmittlere Teilchengröße von 69 nm.

### Herstellung von wässrigen Beschichtungsmitteln:

Die wässrige Dispersion des (Meth)acrylsäureester-Copolymerisats aus Beispiel 1 (Feststoffgehalt von 41,5%) und/oder die wässrige, vernetzbare Polyurethan-Dispersion LUX 481 (Feststoffgehalt: 40%; Acrylat-Vernetzer; Glasübergangstemperatur Tg von 8°C; Handelsname der Firma Alberding Boley) und 1,0 Gew.-% Irgacure^{®} 500 (Photoinitiator; Firma BASF), bezogen auf den Feststoffgehalt der Dispersion Lux 481, wurden bei Raumtemperatur während 10 Minuten mit einem herkömmlichen Mischer mit Paddelrührer gemischt.

Die Einsatzmengen am (Meth)acrylsäureester-Copolymerisat aus Beispiel 1 und der wässrigen, vernetzbaren Polyurethan-Dispersion LUX 481 sind in den Tabellen 1 und 2 angegeben.

### Herstellung einer zementären Bodenbeschichtung als Substrat für die Austestung:

Die Polymer-modifizierte Bodenausgleichsmasse Weber.floor 4650 (Trockenmischung; Handelsname der Firma Weber) wurde unter ständigem Rühren (Bohrmaschine mit Quirl, 500 U/min) in das Anmachwasser (4,8 Liter Wasser pro 25 kg der Trockenmischung) gegeben. Nach einer Reifezeit von einer Minute wurde nochmals durchgemischt.

Die so erhaltene Masse wurde in eine Schablone mit 0,5 mm Schichtdicke gegossen. Anschließend wurde für 28 Tage unter Normklima (23°C und 50% Luftfeuchtigkeit) getrocknet.

### Applikation von wässrigen Beschichtungsmitteln auf die zementäre Bodenbeschichtung:

Das jeweilige wässrige Beschichtungsmittel wurde mit einem Pinsel auf die zementäre Bodenbeschichtung gleichmäßig mit 100 g/m² aufgetragen und für sechs Stunden im Normklima (23°C und 50% Luftfeuchtigkeit) getrocknet.

Anschließend wurde das Beschichtungsmittel mit dem UV-Bandtrockner Aktiprint Mini (Handelsname der Firma Technigraf) vernetzt, wodurch die Beschichtung erhalten wurde.

### Austestung der Verschmutzungsneigung und der chemischen Beständigkeit der Beschichtung:

Die Austestung erfolgte nach DIN EN 12720 (DIN 68861-1-1B). Folgende Flüssigkeiten wurden auf die Beschichtung aufgetragen, und nach der angegebenen Einwirkungszeit wurde die jeweilige Beschichtung auf ihre Verschmutzungsneigung untersucht: Rotwein (6 h), Aceton (10 s), 20%iges Ethanol (1 h), Essigsäure (1 h) beziehungsweise Olivenöl (16 h).

Die Verschmutzungsneigung der Beschichtungen wurden nach folgendem Bewertungssystem beurteilt:
5: keine sichtbaren Veränderung;
4: eben erkennbare Änderungen in Glanz oder Farbe;
3: leicht erkennbare Änderungen in Glanz oder Farbe; die Struktur der Prüffläche ist nicht verändert;
2: starke Markierung sichtbar; die Struktur der Prüffläche ist jedoch weitgehend unbeschädigt;
1: starke Markierung sichtbar; die Struktur der Prüffläche ist verändert.

Die Austestungsergebnisse sind in der folgenden Tabelle 1 zusammengefasst.

**Tabelle 1: Verschmutzungsneigung und chemische Beständigkeit der Beschichtungen:**

| Beschichtungsmittel | keines | LUX 481*) / Bsp. 1*) | | | | Bsp. 1 |
|---|---|---|---|---|---|---|
| | | 70%/30% | 60%/40% | 50%/50% | 30%/70% | |
| Rotwein | 1 | 5 | 5 | 5 | 5 | 5 |
| Aceton | - | 5 | 5 | 5 | 3 | 3 |
| 20%iges Ethanol | - | 5 | 5 | 5 | 5 | 5 |
| Essigsäure | 1 | 5 | 5 | 5 | 5 | 5 |
| Olivenöl | 1 | 5 | 5 | 5 | 4 | 3 |

| | | | | | | |
|---|---|---|---|---|---|---|
| *: LUX 481: vernetzbare Polyurethan-Dispersion der Firma Alberding Boley); Bsp.1: wässrige Dispersion des (Meth)acrylsäureester-Copolymerisats von Beispiel 1; das Mischungsverhältnis von LUX 481 / Bsp.1 bezieht sich auf den Feststoffgehalt der beiden Dispersionen. | | | | | | |

### Austestung der Abriebsbeständigkeit der Beschichtung:

Die Austestung erfolgte nach dem Taber-Abrieb-Test entsprechend der DIN EN ISO 5470-1:2017-04. Hierbei handelt es sich um eine Gewichtsverlustmethode. Die jeweilige Beschichtung wurde 500 Umdrehungszyklen ausgesetzt. Durch Differenzwiegen wurde der abgeriebene Anteil der Beschichtung.

In der Tabelle 2 ist der Abrieb der jeweiligen Beschichtung in Gramm angegeben.

**Tabelle 2: Abriebsbeständigkeit der Beschichtungen:**

| Beschichtungsmittel | keines | LUX | LUX 481*) / Bsp.1*) | | | |
|---|---|---|---|---|---|---|
| | | | 70%/30% | 60%/40% | 50%/50% | 30%/70% |
| Taber-Abrieb [g] | 0,39 | 0,035 | 0,031 | 0, 024 | 0,021 | 0,019 |

| | | | | | | |
|---|---|---|---|---|---|---|
| *: LUX 481: vernetzbare Polyurethan-Dispersion der Firma Alberding Boley); Bsp.1: wässrige Dispersion des (Meth)acrylsäureester-Copolymerisats von Beispiel 1; das Mischungsverhältnis von LUX 481 / Bsp.1 bezieht sich auf den Feststoffgehalt der beiden Dispersionen. | | | | | | |

## Patentansprüche

1. Wässrige Beschichtungsmittel enthaltend
ein oder mehrere Copolymerisate von Acrylsäureestern oder Methacrylsäureestern,
ein oder mehrere vernetzbare, ethylenisch ungesättigte Gruppen tragende Polyurethane und
gegebenenfalls ein oder mehrere Additive,
wobei die Copolymerisate von Acrylsäureestern oder Methacrylsäureestern basieren auf den ethylenisch ungesättigten Monomeren bestehend aus
a) den Monomeren 2-Ethylhexylacrylat und n-Butylacrylat, wobei die Monomere a) zu 20 bis 80 Gew.-%, bezogen auf das Gesamtgewicht der Copolymerisate der Acrylsäureester oder Methacrylsäureester, in die Copolymerisate von Acrylsäureestern oder Methacrylsäureestern einpolymerisiert sind,
b) 20 bis 80 Gew.-%, bezogen auf das Gesamtgewicht der Copolymerisate der Acrylsäureester oder Methacrylsäureester, an einem oder mehreren ethylenisch ungesättigten Monomeren, deren Homopolymerisat eine Glasübergangstemperatur Tg gemäß DSC von ≥ 30°C aufweist, ausgewählt aus der Gruppe bestehend aus Styrol, alpha-Methylstyrol, Methylmethacrylat, tert.-Butylmethacrylat, tert.-Butylacrylat, Laurylacrylat und Stearylacrylat,
c) gegebenenfalls 0,1 bis 10 Gew.-%, bezogen auf das Gesamtgewicht der Copolymerisate der Acrylsäureester oder Methacrylsäureester, an einem oder mehreren Säure-Gruppen tragenden ethylenisch ungesättigten Monomeren ausgewählt aus der Gruppe bestehend aus Acrylsäure, Methacrylsäure, Crotonsäure, Fumarsäure, Maleinsäure, Itaconsäure, Acrylamidoglykolsäure, Vinylsulfonsäure, Methallylsulfonsäure, Vinylbenzolsulfonsäure, Acrylamidoethansulfonsäure, Acrylamido-2-methylpropansul-fonsäure, 2-Sulfoethylacrylat, 2-Sulfoethylmethacrylat, 3-Sulfopropylacrylat und 3-Sulfopropyl-methacrylat und
d) gegebenenfalls 0 bis 5 Gew.-%, bezogen auf das Gesamtgewicht der Copolymerisate der Acrylsäureester oder Methacrylsäureester, an einem oder mehreren ethylenisch ungesättigten, Silan-Gruppen tragenden Monomeren d).

2. Wässrige Beschichtungsmittel gemäß Anspruch 1, **dadurch gekennzeichnet, dass** die Copolymerisate von Acrylsäureestern oder Methacrylsäureestern zu 30 bis 70 Gew.-% auf Monomeren a) basieren, bezogen auf das Gesamtgewicht der Copolymerisate von Acrylsäureestern oder Methacrylsäureestern.

3. Wässrige Beschichtungsmittel gemäß Anspruch 1 bis 2, **dadurch gekennzeichnet, dass** ein oder mehrere Monomeren b) ausgewählt werden aus der Gruppe bestehend aus Styrol und Methylmethacrylat.

4. Wässrige Beschichtungsmittel gemäß Anspruch 1 bis 3, **dadurch gekennzeichnet, dass** die Copolymerisate von Acrylsäureestern oder Methacrylsäureestern zu 30 bis 70 Gew.-% auf Monomeren b) basieren, bezogen auf das Gesamtgewicht der Copolymerisate von Acrylsäureestern oder Methacrylsäureestern.

5. Wässrige Beschichtungsmittel gemäß Anspruch 1 bis 4, **dadurch gekennzeichnet, dass** es sich bei einem oder mehreren der vernetzbaren Polyurethane um Polymere handelt, die durch Polyadditionsreaktion von Diolen oder Polyolen mit Polyisocyanaten erhältlich sind und ein oder mehrere ethylenisch ungesättigte Gruppen tragen.

6. Wässrige Beschichtungsmittel gemäß Anspruch 1 bis 5, **dadurch gekennzeichnet, dass** die wässrigen Dispersionen der vernetzbaren, ethylenisch ungesättigte Gruppen tragenden Polyurethane aufgebaut sind aus
A) einem oder mehreren aliphatischen oder aromatischen Polyisocyanaten mit mindestens zwei NCO-Funktionalitäten,
B) mindestens einer Verbindung mit mindestens einer gegenüber Isocyanat reaktiven Gruppe sowie mindestens einer C=C-Doppelbindung,
C) gegebenenfalls mindestens einer Verbindung mit mindestens zwei gegenüber Isocyanatgruppen reaktiven Gruppen, die ausgewählt sind aus Hydroxyl-, Mercapto-, primären und/oder sekundären Amino-Gruppen,
D) gegebenenfalls mindestens einer Verbindung mit mindestens einer gegenüber Isocyanat reaktiven Gruppe sowie mindestens einer Carboxylgruppe oder Sulfonsäuregruppe,
E) gegebenenfalls mindestens einer basischen Verbindung für eine Neutralisation oder Teilneutralisation der Säuregruppen der Verbindungen D),
F) gegebenenfalls wenigstens einer von B), D) und E) verschiedenen Verbindung, die nur eine gegenüber Isocyanatgruppen reaktive Gruppe aufweist,
G) gegebenenfalls einem oder mehreren thermischen Initiatoren,
H) gegebenenfalls einem oder mehreren Photoinitiatoren,
I) gegebenenfalls Zusatzstoffen sowie
J) Wasser.

7. Wässrige Beschichtungsmittel gemäß Anspruch 6, **dadurch gekennzeichnet, dass** die Isocyanatgruppen der Komponente A) der vernetzbaren, ethylenisch ungesättigte Gruppen tragenden Polyurethane zu folgenden Mol%-Anteilen mit folgenden Komponenten umgesetzt sind:
zu 5 bis 80 Mol% mit der Komponente B),
zu 0 bis 70 Mol% mit der Komponente C) und
zu 0,1 bis 40 Mol% mit der Komponente D),
wobei sich die Angaben auf molare Äquivalente einer funktionellen Gruppe beziehen.

8. Verwendung der wässrigen Beschichtungsmittel aus Anspruch 1 bis 7 zur Herstellung von Beschichtungen.

9. Verwendung der wässrigen Beschichtungsmittel gemäß Anspruch 8 zur Herstellung von pigmentierten oder transparenten Beschichtungen, insbesondere für Holzoberflächen oder mineralische Oberflächen.

## Claims

1. Aqueous coating compositions comprising
one or more copolymers of acrylic esters or methacrylic esters,
one or more polyurethanes bearing crosslinkable ethylenically unsaturated groups and
optionally one or more additives
wherein the copolymers of acrylic esters or methacrylic esters are based on ethylenically unsaturated monomers consisting of
a) the monomers 2-ethylhexyl acrylate and n-butyl acrylate, the monomers a) being incorporated into the copolymers of acrylic esters or methacrylic esters to an extent of 20% to 80% by weight based on the total weight of copolymers of acrylic esters or methacrylic esters,
b) 20% to 80% by weight, based on the total weight of copolymers of acrylic esters or methacrylic esters, of one or more ethylenically unsaturated monomer, the homopolymer of which has a glass transition temperature Tg according to DSC of ≥ 30°C, selected from the group consisting of styrene, alpha-methylstyrene, methyl methacrylate, tert-butyl methacrylate, tert-butyl acrylate, lauryl acrylate and stearyl acrylate,
c) optionally 0.1% to 10% by weight, based on the total weight of copolymers of acrylic esters or methacrylic esters, of one or more ethylenically unsaturated monomers bearing acid groups selected from the group consisting of acrylic acid, methacrylic acid, crotonic acid, fumaric acid, maleic acid, itaconic acid, acrylamidoglycolic acid, vinylsulfonic acid, methallylsulfonic acid, vinylbenzenesulfonic acid, acrylamidoethanesulfonic acid, acrylamido-2-methylpropanesulfonic acid, 2-sulfoethyl acrylate, 2-sulfoethyl methacrylate, 3-sulfopropyl acrylate and 3-sulfopropyl methacrylate, and
d) optionally 0% to 5% by weight, based on the total weight of copolymers of acrylic esters or methacrylic esters, of one or more ethylenically unsaturated monomers d) bearing silane groups.

2. Aqueous coating compositions according to Claim 1, **characterized in that** the copolymers of acrylic esters or methacrylic esters are based to an extent of 30% to 70% by weight of monomer a), based on the total weight of copolymers of acrylic esters or methacrylic esters.

3. Aqueous coating compositions according to Claim 1 or 2, **characterized in that** one or more monomers b) are selected from the group consisting of styrene and methyl methacrylate.

4. Aqueous coating compositions according to Claim 1 to 3, **characterized in that** the copolymers of acrylic esters or methacrylic esters are based to an extent of 30% to 70% by weight of monomer b), based on the total weight of copolymers of acrylic esters or methacrylic esters.

5. Aqueous coating compositions according to Claim 1 to 4, **characterized in that** one or more of the crosslinkable polyurethanes are polymers that are obtainable by a polyaddition reaction of diols or polyols with polyisocyanates and bear one or more ethylenically unsaturated groups.

6. Aqueous coating compositions according to Claim 1 to 5, **characterized in that** the aqueous dispersions of polyurethanes bearing crosslinkable ethylenically unsaturated groups are formed from
A) one or more aliphatic or aromatic polyisocyanates having at least two NCO functionalities,
B) at least one compound having at least one isocyanate-reactive group and at least one carbon-carbon double bond,
C) optionally at least one compound having at least two groups that are reactive towards isocyanate groups and are selected from hydroxyl groups, mercapto groups and primary and/or secondary amino groups,
D) optionally at least one compound having at least one isocyanate-reactive group and at least one carboxyl group or sulfonic acid group,
E) optionally at least one basic compound for neutralization or partial neutralization of the acid groups of compounds D),
F) optionally at least one compound different from B), D) and E) that has only one group reactive towards isocyanate groups,
G) optionally one or more thermal initiators,
H) optionally one or more photoinitiators,
I) optionally other added substances and
J) water.

7. Aqueous coating compositions according to Claim 6, **characterized in that** the isocyanate groups of component A) of the polyurethanes bearing crosslinkable ethylenically unsaturated groups are reacted with the following components in the following mol% proportions:
with component B) in a proportion of 5 to 80 mol%,
with component C) in a proportion of 0 to 70 mol% and
with component D) in a proportion of 0.1 to 40 mol%, the stated amounts being based on molar equivalents of a functional group.

8. Use of the aqueous coating compositions from Claim 1 to 7 for the production of coatings.

9. Use of the aqueous coating compositions according to Claim 8 for the production of pigmented or transparent coatings, for wood surfaces or mineral surfaces in particular.

## Revendications

1. Agent de revêtement aqueux, contenant
un ou plusieurs copolymères d'esters de l'acide acrylique ou d'esters de l'acide méthacrylique,
un ou plusieurs polyuréthanes réticulables, portant des groupes éthyléniquement insaturés et
le cas échéant un ou plusieurs additifs,
les copolymères d'esters de l'acide acrylique ou d'esters de l'acide méthacrylique étant basés sur les monomères éthyléniquement insaturés constitués par
a) les monomères acrylate de 2-éthylhexyle et acrylate de n-butyle, les monomères a) étant copolymérisés à raison de 20 à 80% en poids, par rapport au poids total des copolymères des esters de l'acide acrylique ou des esters de l'acide méthacrylique, dans les copolymères d'esters de l'acide acrylique ou d'esters de l'acide méthacrylique,
b) 20 à 80% en poids, par rapport au poids total des copolymères des esters de l'acide acrylique ou des esters de l'acide méthacrylique, d'un ou de plusieurs monomères éthyléniquement insaturés, dont l'homopolymère présente une température de transition vitreuse Tg selon la DSC (calorimétrie différentielle à balayage) ≥ 30°C, choisis dans le groupe constitué par le styrène, l'alpha-méthylstyrène, le méthacrylate de méthyle, le méthacrylate de tert-butyle, l'acrylate de tert-butyle, l'acrylate de lauryle et l'acrylate de stéaryle,
c) le cas échéant 0,1 à 10% en poids, par rapport au poids total des copolymères des esters de l'acide acrylique ou des esters de l'acide méthacrylique, d'un ou de plusieurs monomères éthyléniquement insaturés portant des groupes acides choisis dans le groupe constitué par l'acide acrylique, l'acide méthacrylique, l'acide crotonique, l'acide fumarique, l'acide maléique, l'acide itaconique, l'acide acrylamidoglycolique, l'acide vinylsulfonique, l'acide méthallylsulfonique, l'acide vinylbenzènesulfonique, l'acide acrylamidoéthanesulfonique, l'acide acrylamido-2-méthylpropanesulfonique, l'acrylate de 2-sulfoéthyle, le méthacrylate de 2-sulfoéthyle, l'acrylate de 3-sulfopropyle et le méthacrylate de 3-sulfopropyle et
d) le cas échéant 0 à 5% en poids, par rapport au poids total des copolymères des esters de l'acide acrylique ou des esters de l'acide méthacrylique, d'un ou de plusieurs monomères éthyléniquement insaturés, portant des groupes silane d).

2. Agent de revêtement aqueux selon la revendication 1, **caractérisé en ce que** les copolymères d'esters de l'acide acrylique ou d'esters de l'acide méthacrylique sont basés, à raison de 30 à 70% en poids, sur des monomères a), par rapport au poids total des copolymères d'esters de l'acide acrylique ou d'esters de l'acide méthacrylique.

3. Agent de revêtement aqueux selon la revendication 1 à 2, **caractérisé en ce qu'**un ou plusieurs monomères b) sont choisis dans le groupe constitué par le styrène et le méthacrylate de méthyle.

4. Agent de revêtement aqueux selon la revendication 1 à 3, **caractérisé en ce que** les copolymères d'esters de l'acide acrylique ou d'esters de l'acide méthacrylique sont basés, à raison de 30 à 70% en poids, sur des monomères b), par rapport au poids total des copolymères d'esters de l'acide acrylique ou d'esters de l'acide méthacrylique.

5. Agent de revêtement aqueux selon la revendication 1 à 4, **caractérisé en ce qu'**il s'agit, pour ledit un ou lesdits plusieurs des polyuréthanes réticulables, de polymères qui peuvent être obtenus par une réaction de polyaddition de diols ou de polyols avec des polyisocyanates et qui portent un ou plusieurs groupes éthyléniquement insaturés.

6. Agent de revêtement aqueux selon la revendication 1 à 5, **caractérisé en ce que** les dispersions aqueuses des polyuréthanes réticulables, portant des groupes éthyléniquement insaturés, sont constituées par
A) un ou plusieurs polyisocyanates aliphatiques ou aromatiques présentant au moins deux fonctionnalités NCO,
B) au moins un composé présentant au moins un groupe réactif vis-à-vis d'isocyanate ainsi qu'au moins une double liaison C=C,
C) le cas échéant au moins un composé présentant au moins deux groupes réactifs vis-à-vis des groupes isocyanate, qui sont choisis parmi les groupes hydroxyle, mercapto, amino primaire et/ou secondaire,
D) le cas échéant au moins un composé présentant au moins un groupe réactif vis-à-vis d'isocyanate ainsi qu'au moins un groupe carboxyle ou acide sulfonique,
E) le cas échéant au moins un composé basique pour une neutralisation ou une neutralisation partielle des groupes acides des composés D),
F) le cas échéant au moins un composé différent de B), de D) et de E), qui ne présente qu'un groupe réactif vis-à-vis des groupes isocyanate,
G) le cas échéant un ou plusieurs initiateurs thermiques,
H) le cas échéant un ou plusieurs photo-initiateurs,
I) le cas échéant des additifs, ainsi que
J) de l'eau.

7. Agent de revêtement aqueux selon la revendication 6, **caractérisé en ce que** les groupes isocyanate du composant A) des polyuréthanes réticulables portant des groupes éthyléniquement insaturés sont transformés avec les composants suivants, à raison des proportions en % en mole suivantes :
5 à 80% en poids du composant B)
0 à 70% en poids du composant C) et
0,1 à 40% en mole du composant D),
les indications se rapportant aux équivalents molaires d'un groupe fonctionnel.

8. Utilisation de l'agent de revêtement aqueux selon la revendication 1 à 7 pour la réalisation de revêtements.

9. Utilisation de l'agent de revêtement aqueux selon la revendication 8 pour la réalisation de revêtements pigmentés ou transparents, en particulier pour les surfaces en bois ou les surfaces minérales.
